Europäisches Patentamt

European Patent Office

Office européen des brevets

(19)

(11) Veröffentlichungsnummer: **0 006 211 B1**

(12) **EUROPÄISCHE PATENTSCHRIFT**

(45) Veröffentlichungstag der Patentschrift:
05.08.81

(51) Int. Cl.³: **F 24 D 17/00**

(21) Anmeldenummer: **79101886.4**

(22) Anmeldetag: **11.06.79**

(54) **Vorrichtung zur Warmwasserbereitung mittels Sonnenenergie.**

(30) Priorität: **16.06.78 CH 6581/78**
**29.08.78 CH 9114/78**

(43) Veröffentlichungstag der Anmeldung:
**09.01.80 Patentblatt 80/1**

(45) Bekanntmachung des Hinweises auf die Patenterteilung:
**05.08.81 Patentblatt 81/31**

(84) Benannte Vertragsstaaten:
**AT CH DE FR GB IT NL**

(56) Entgegenhaltungen:
**CH-A-578 718**
**FR-A-2 325 003**
**FR-A-2 365 772**
**FR-A-2 392 338**
**US-A-4 063 546**

(73) Patentinhaber: **CIBA-GEIGY AG, Patentabteilung**
**Postfach, CH-4002 Basel (CH)**

(72) Erfinder: **Kreibich, Usula, Dr., Im finstern Boden 15,**
**CH-4125 Riehen (CH)**
Erfinder: **Schmid, Rolf, Dr., Weihermattweg 18,**
**CH-4460 Gelterkinden (CH)**

ACTORUM AG.

## Vorrichtung zur Warmwasserbereitung mittels Sonnenenergie

Sonnenenergieverwertungsvorrichtungen sind in zahlreichen Publikationen, unter anderem auch im Artikel «Die Sonnenheizanlage eines Wohnhauses» von R. Schärer in «Elektrizitätsverwertung» Nr. 7/8 (S. 32–40) (1974) Verlag Elektrowirtschaft, Zürich; in dem Vortrag «Ausgeführte Anlagen aus der Sicht des Praktikers» von E. Schnyder auf der Tagung «Heizen mit Sonne» der Schweizerischen und Deutschen Gesellschaft für Sonnenenergie von 8./9. November 1977 in Freiburg, BRD, und in «Solar Energy Thermal Processes» von J. A. Duffie und W. A. Beckmann, Wiley Interscience 1974, ausführlich und in zahlreichen Varianten erläutert. Allen diesen bekannten Vorrichtungen haftet der Nachteil an, dass sie die Sonnenenergie, insbesondere deren minderwertigeren Anteil mit niedrigerem Temperaturniveau, nur unbefriedigend auszunutzen vermögen.

Eine bedeutende Verbesserung in dieser Hinsicht brachte die z.B. in der US-A-4 063 546 beschriebene zweistufige Sonnenenergieanlage. Bei dieser Anlage sind zwei im wesentlichen selbständige Systeme mit je einem Kollektor, einem Speicher und einem Wärmetauscher vorhanden, wobei das eine System auf einem niedrigeren und das andere auf einem höheren Temperaturniveau arbeitet. Eine ähnliche Anlage, jedoch ohne Latentwärmespeicher, ist auch aus der CH-A-578 718 bekannt. Die Praxis hat gezeigt, dass jedoch auch diese bekannten Vorrichtungen hinsichtlich ihres Wirkungsgrads noch verbessert werden können.

Eine weitere Sonnenenergieanlage ist aus der US-A-3 931 806 bekannt. Bei dieser wird das selbst als Speichermedium dienende Zirkulationsmedium in Abhängigkeit von seiner Temperatur derart durch drei verschiedene Speichertanks oder durch drei verschiedene Zonen eines Speichertanks geleitet, dass die Tanks bzw. Zonen mit steigender Temperatur des Zirkulationsmediums sukzessive erwärmt werden. Der Rückfluss des Zirkulationsmediums zum Sonnenkollektor erfolgt immer vom Tank bzw. der Zone mit dem niedrigsten Temperaturniveau, der Zufluss zu einem Nutzwärmetauscher bzw. Verbraucher konstant vom Tank bzw. der Zone mit dem höchsten Temperaturniveau aus. Diese bekannte Sonnenenergie vermag die anfallende Sonnenenergie ebenfalls nicht optimal zu nützen.

Aufgabe der Erfindung ist, eine Vorrichtung der im Oberbegriff des Patentanspruchs 1 definierten Art derart zu modifizieren, dass sie eine bessere und energiegerechtere Verwertung der anfallenden Sonnenenergie ermöglicht.

Die erfindungsgemässe Vorrichtung ist durch die in den Ansprüchen angeführten Merkmale gekennzeichnet.

Unter Wärmetauscher sind hier und im folgenden Vorrichtungen zu verstehen, welche es gestatten, dem durch die Sonnenenergie aufgeheizten Wärmeübertragungsmedium die in ihm enthaltene Wärmeenergie zu entnehmen, bis zu einem gewissen Grad zu speichern und an das zu erwärmende Medium, das in der Regel direkt das Brauchwasser ist, abzugeben. Typische Vertreter solcher Wärmetauscher bestehen aus einem flüssigkeitsgefüllten Gefäss mit zwei in die Flüssigkeit eintauchenden Wärmeaustauschschlangen, durch deren eine das von der Sonnenenergie aufgeheizte Medium und durch deren andere das Brauchwasser fliesst. Die Flüssigkeit im Gefäss dient dabei gleichzeitig als thermische Verbindung zwischen den beiden Schlangen und als Speichermedium. Unter Betriebstemperatur des Wärmetauschers ist dann die Temperatur der Flüssigkeit im Gefäss zu verstehen. In Spezialfällen kann das Brauchwasser selbst als Speichermedium verwendet werden, wobei dann natürlich eine der Wärmetauschschlangen wegfallen kann.

Wenngleich der eben beschriebene Wärmetauschertyp besonders zweckmässig ist, versteht es sich, dass z.B. die Speicher- und die Wärmetauschfunktion durchaus auch auf getrennte Vorrichtungsteile aufgeteilt sein könnten und dass die Erfindung keineswegs auf die eben näher beschriebenen boilerartigen Wärmetauschertypen eingeschränkt ist.

Im folgenden wird die Erfindung anhand eines in der Zeichnung dargestellten Ausführungsbeispiels näher erläutert. Es zeigen:

Fig. 1 ein Prinzipschema der Vorrichtung und

Fig. 2 und 3 zwei Schnitte durch einen Teil der Vorrichtung entsprechend den Linien II-II der Figur 3 und den Linien III-III der Figur 2.

Die Vorrichtung umfasst darstellungsgemäss einen Sonnenkollektor K, drei brauchwasserseitig in Serie geschaltete Wärmetauscher A, B und C, einen Latentwärmespeicher S, eine Umwälzpumpe P, acht Ventile 1–8, zwei Mischventile MV1 und MV2 sowie diese Teile untereinander verbindende, nicht mit Bezugsziffern versehene Leitungen. Ferner sind sieben Temperaturfühler sowie eine von diesen angesteuerte und die Ventile 1–8 sowie die Umwälzpumpe P und eine elektrische Heizung 34 im Wärmetauscher C betätigende Steuerung ST vorgesehen. Die Temperaturfühler erfassen die Temperatur $T_K$ des Zirkulationswassers im Kollektor K, die Betriebstemperaturen $T_A$, $T_B$, $T_C$ der drei Wärmetauscher A-C, die Temperatur $T_S$ des Speichers S und die Temperaturen $T_{W1}$, $T_{W2}$ des aus den Wärmetauschern B und C austretenden Brauchwassers. Die Verbindungsleitungen zwischen der Steuerung und den Temperaturfühlern bzw. den Ventilen, der Pumpe und der Zusatzheizung sind der Übersichtlichkeit halber nicht dargestellt.

Der Sonnenkollektor und die Wärmetauscher sind im wesentlichen von bekannter Bauart, ebenso der Latentwärmespeicher. Jeder Wärmetauscher besteht im wesentlichen aus einem Behältnis 11, 21 bzw. 31, in welchem sich ein wärmeübertragendes Medium hoher Wärmekapazität, z.B. etwa Wasser, befindet. In dieses Medium tauchen je eine Primärschlange 12, 22 bzw. 32 und eine Sekundärschlange 13, 23 bzw. 33 ein. Der Wärmetauscher C kann als Medium zusätzlich noch ein Latentwärme speicherndes Material, beispielsweise etwa Paraffin, enthalten. Ferner ist dieser Wärmetauscher mit der Zusatzheizung 34, insbesondere in Form einer elektrischen Heizspirale, versehen.

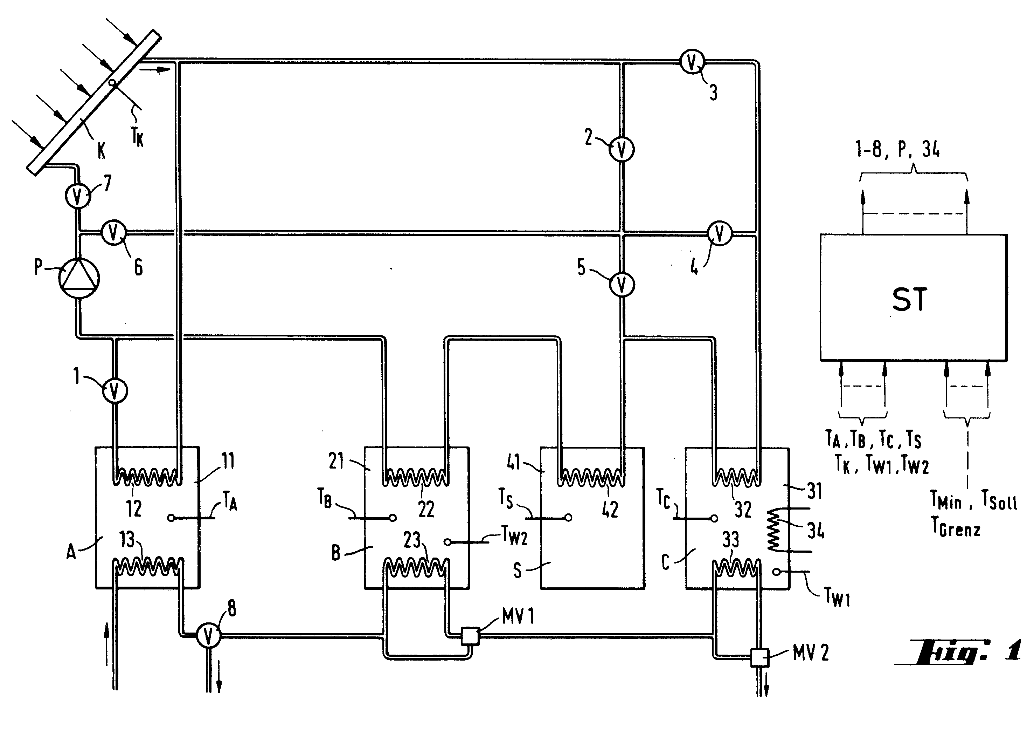

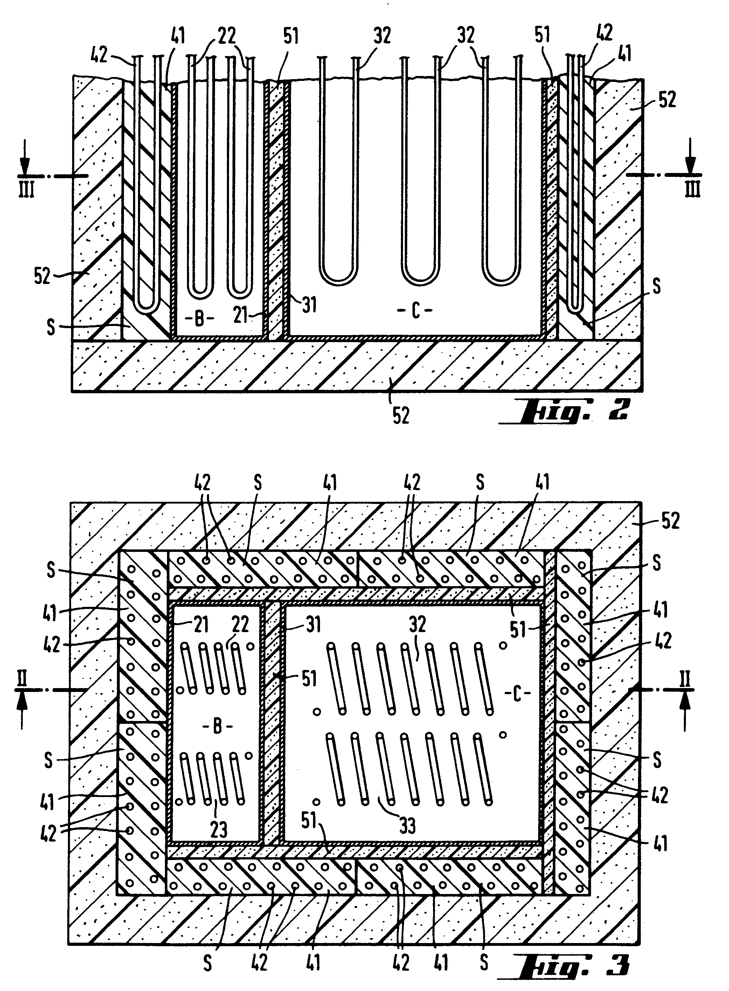

Der Latentwärmespeicher S besteht im wesentlichen aus einem oder mehreren Blöcken 41 (Fig. 2, 3) eines vernetzten, teilkristallinen Kunststoffs, in dem eine Wärmetauscherschlange 42 eingebettet ist. Ein solcher Latentwärmespeicher ist ausführlicher in der eingangs genannten US-A-4 063 546 beschrieben.

Die Wärmetauscher B und C sowie der Latentwärmespeicher S sind zu einer kompakten baulichen Einheit zusammengefasst. Wie die Schnittdarstellungen der Fig. 2 und 3 zeigen, sind die beiden Wärmetauscher von den den Latentwärmespeicher S bildenden Platten 41 umschlossen, wobei der Wärmetauscher C und teilweise auch der Wärmetauscher B noch mittels einer Weichschaumstoffschicht 51 isoliert sind. Der gesamte Block ist mittels einer weiteren Schaumstoffschicht 52 nach aussen gegen Wärmeverluste isoliert.

Die Platten 41 des Latentwärmespeichers S sind im Normalfall mit untereinander kommunizierenden Wärmetauschelementen 42 versehen. Es ist aber durchaus auch möglich, auf diese Elemente ganz oder teilweise zu verzichten und den Speicher über seine grosse Kontaktoberfläche mit dem Wärmetauscher B zu laden.

Der Wärmetauscher A ist baulich separat angeordnet. Er arbeitet auf dem niedrigsten Temperaturniveau und benötigt deshalb keine besondere Isolation.

Die Grössen bzw. Volumina der drei Wärmetauscher A-C und des Latentwärmespeichers S verhalten sich etwa wie A:B:C:S = 1:1:2-8:2. Das heisst, die Inhalte der Behältnisse 11 und 21 der Wärmetauscher A und B sind etwa 400 l und der Inhalt des Behältnisses 31 des Wärmetauschers C ist etwa 800–3200 l; das Volumen des Latentwärmespeichers, d.h. der Platten 41 ist etwa 800 l. Diese Werte sind selbstverständlich nur beispielsweise zu verstehen und können natürlich den jeweiligen Erfordernissen angepasst werden.

Die Funktionsweise der Vorrichtung ist wie folgt: Mit beginnender Sonneneinstrahlung erwärmt sich das Wasser im Sonnenkollektor K. Sobald die Temperatur $T_K$ des Wassers im Kollektor die Temperatur $T_A$ des Wärmetauschers A übersteigt, öffnet die Steuerung ST die Ventile 1 und 7, sodass das Zirkulationswasser in einem ersten Ladekreislauf vom Kollektor K über den Wärmetauscher A und die Pumpe P zurück zum Kollektor zirkulieren kann. Sobald, infolge stärkerer Sonneneinstrahlung, sich das Zirkulationswasser über die Betriebstemperatur $T_B$ des Wärmetauschers B erwärmt oder, je nach Steuerungsart, die Differenz der Temperatur des Zirkulationswassers und des Wärmetauschers B eine vorbestimmte Schwelle übersteigt, schaltet die Steuerung auf einen zweiten Ladekreislauf um. Dabei sind die Ventile 2, 5 und 7 offen und die Ventile 1, 3, 4 und 6 geschlossen. Das warme Wasser zirkuliert nun vom Kollektor K über den Latentwärmespeicher S, den Wärmetauscher B und die Pumpe P zurück zum Kollektor und lädt dabei einerseits den Speicher auf und erhitzt anderseits das durch die Wärmetauscher fliessende Brauchwasser.

Falls die Temperatur $T_K$ des Zirkulationswassers im Kollektor K auch über die (vorgegebene Minimal-) Betriebtemperatur $T_C$ des Wärmetauschers C steigt bzw. wenn die Differenz der Temperaturen des Zirkulationswassers und des Wärmetauschers C eine vorgegebene Schwelle übersteigt, schaltet die Steuerung ST auf einen weiteren, dritten Ladekreislauf um, bei welchem die Ventile 3 und 7 offen und die Ventile 1, 2, 4, 5 und 6 geschlossen sind. Das Zirkulationswasser zirkuliert nun vom Kollektor über den Wärmetauscher C, den Speicher S, den Wärmetauscher B und die Pumpe P zurück zum Kollektor. Es gibt dabei die in ihm gespeicherte Wärmeenergie in den beiden Wärmetauschern B und C an das Brauchwasser ab und lädt gleichzeitig den Latentwärmespeicher S weiter auf.

Bei normaler Witterung erreicht das Gebrauchswasser zumindest im Wärmetauscher C den gewünschten Sollwert $T_{Soll}$, z.B. etwa 55 °C = 328 °K. Bei Schlechtwetterperioden oder im Winter kann es erforderlich sein, die Zusatzheizung 34 im Wärmetauscher C einzuschalten. Auch dies erfolgt automatisch über die Steuerung ST, welche die Temperatur $T_{W1}$ des Brauchwassers im Wärmetauscher C über den entsprechenden Temperaturfühler laufend überwacht.

Die beiden Wärmetauscher B und C sind brauchwasserseitig je über ein Mischventil MV1 bzw. MV2 überbrückt. Die beiden Mischventile sind z.B. von der Art, wie sie bei Badezimmerarmaturen gebräuchlich sind. Sie regeln den Zufluss von kälterem und wärmerem Wasser derart, dass sich an ihrem Ausgang die gewünschte Temperatur einstellt. Diese kann z.B. bei etwa 55 °C liegen. Die Mischventile bewirken, dass die Wärmetauscher der tieferen Temperaturniveaus stärker belastet und damit eher zur Aufnahme minderwertigerer Energie bereit werden. Die höherwertigere Energie der heisseren Wärmetauscher wird dadurch geschont, sodass sich ein wesentlich besserer Gesamteffekt ergibt.

In einer in der Zeichnung nicht dargestellten, einfacheren Variante fehlt das Mischventil MV1 und anstelle des Mischventils MV2 ist ein gewöhnliches Dreiweg-Elektroventil vorgesehen, welches von der Steuerung ST angesteuert wird. Bei günstiger Witterung kann das Brauchwasser bereits im Wärmetauscher B die Solltemperatur erreichen. Wenn dies über den entsprechenden Fühler festgestellt wird, schaltet die Steuerung ST das nicht dargestellte Ventil so um, dass das warme Brauchwasser gar nicht erst zum Wärmetauscher C, sondern direkt zum Verbraucher gelangt.

Zu Zeiten besonders intensiver Sonneneinstrahlung kann es vorkommen, dass sich die Wärmetauscher unzulässig hoch aufheizen. Um dies zu vermeiden, ist ein Überhitzungsschutz vorgesehen, welcher wie folgt funktioniert: Sobald die Temperatur des Wärmetauschers C über eine vorgegebene Grenztemperatur $T_{grenz}$ von z.B. 85°C (=353°K) ansteigt, schaltet die Steuerung ST vom dritten Ladekreislauf auf den zweiten Ladekreislauf zurück, welcher den Wärmetauscher C nicht mehr enthält. Dadurch beginnt sich der Wärmetauscher B aufzuheizen. Sobald auch dessen Temperatur über einen gewissen Grenzwert $T_{grenz}$ von z.B. 80°C ansteigt, schaltet die Steuerung auf den ersten Ladekreis zurück, der ausser der Pumpe P nur noch den Wärmetauscher A enthält. Sollte sich auch dieser Wärmetauscher noch zu stark erwärmen, öffnet die Steuerung das Ventil 8, wodurch kaltes Brauchwasser durch den Wärmetauscher A läuft und diesen kühlt. Auf diese Weise ist in jedem Fall ein ausreichender Überhitzungsschutz gewährleistet, wobei die auf hohem Temperaturniveau in den Wärmetauschern C und B sowie im Speicher S gespeicherte wertvolle Energie nicht angetastet wird.

Wenn die Temperatur des Zirkulationswassers niedriger ist als die Temperatur des Wärmetauschers A und unter der Bedingung, dass der Latentwärmespeicher zumindest teilweise geladen ist, seine Temperatur $T_S$ also grösser als eine vorgegebene Minimaltemperatur $T_{min}$ ist, und ausserdem die Speichertemperatur grösser als die des Wärmetauschers B ist, schaltet die Steuerung auf einen Entladekreislauf, bei dem die Ventile 5 und 6 offen und die Ventile 1, 2, 3, 4 und 7 geschlossen sind. Das Zirkulationswasser zirkuliert so vom Latentwärmespeicher S über den Wärmetauscher B und die Pumpe P zurück zum Speicher S. Dabei wird das Brauchwasser im Wärmetauscher B erwärmt und gleichzeitig der Speicher entladen.

Für die Wintersaison oder für längere Schlechtwetterperioden besteht auch die Möglichkeit, den Speicher S in einem vierten Ladekreislauf über die im Wärmetauscher C angeordnete Zusatzheizung 34, z.B. mittels des billigeren Nachtstroms, zu laden. Dazu wird die Steuerung ST entweder von Hand oder von einer Schaltuhr veranlasst, die Ventile 4 und 6 zu öffnen, die Ventile 1, 2, 3, 5 und 7 zu schliessen und die elektrische Zusatzheizung 34 im Wärmetauscher C einzuschalten. Das Zirkulationswasser fliesst dann vom Wärmetauscher C über den Latentwärmespeicher S, den Wärmetauscher B und die Pumpe P zurück zum Wärmetauscher C.

Die Steuerung ST selbst ist von an sich beliebiger Bauart. Sie kann elektromechanisch oder rein elektronisch konzipiert sein und enthält neben den Eingängen für die diversen Temperaturfühler und den Ausgängen für die Ventile und die Ansteuerung der Zusatzheizung weitere Eingänge für die Einstellung der Solltemperatur $T_{Soll}$, Grenztemperaturen $T_{grenz}$ und Minimaltemperaturen $T_{min}$. Die elektrische Realisierung der Steuerung ist belanglos, solange nur der vorstehend geschilderte Funktionsablauf zumindest dem Sinn nach gewährleistet ist. Selbstverständlich sind auch gewisse Modifikationen und Varianten möglich, die ebenfalls im Rahmen der Erfindung liegen. Insbesondere ist es auch möglich, anstelle der einfachen Temperaturfühler mit Differenzthermostaten zu arbeiten.

Abgesehen von der maximalen Ausnützung der eingestrahlten Sonnenenergie, und zwar auch der niedererwertigen Energie, hat die vorstehend beschriebene Anlage noch den Vorteil relativ geringer Gestehungskosten. So sind zum Beispiel für die diversen Kreisläufe nur ein Kollektor und nur eine einzige Umwälzpumpe erforderlich. Auch können relativ billige Sonnenkollektoren verwendet werden und auch für die Wärmetauscher sind keine teuren Sonderkonstruktionen nötig. Durch die Wärmetauscherstufe A auf niedrigstem Temperaturniveau kann auch die weniger wertvolle Sonnenenergie, die beispielsweise bei trübem Wetter immer noch vorhanden ist, zu einem grossen Teil ausgenutzt werden.

Durch das By-Passen des bzw. der Wärmetauscher(s) auf höherem Temperaturniveau wird das Brauchwasser lediglich auf die gewünschte Minimaltemperatur erwärmt. Dadurch wird einerseits weniger von der wertvolleren Energie auf höherem Temperaturniveau verbraucht und andererseits die Temperatur der auf niedrigerem Niveau arbeitenden Wärmetauscher erniedrigt, sodass sie auch weniger wertvolle Energie besser und vermehrt aufnehmen können. Beim erfindungsgemässen dreistufigen System ist dadurch vor allem der Wärmetauscher A öfter bereit, diffuse Wärme zu speichern, die dann zum Vorwärmen des kalten Brauchwassers verwendet werden kann. Die tiefen Temperaturen des Wärmetauschers B und insbesondere des Wärmetauschers A bewirken niedrige Kreislauftemperaturen und damit einen wesentlich besseren Wirkungsgrad des Kollektors und damit schliesslich der Gesamtanlage. Ausserdem besteht damit die Möglichkeit, vor allem mit der Stufe A auch minderwertige Abwärme zu nutzen.

Besonders vorteilhaft ist die Ausbildung der Wärmetauscher und Speicher als plattenförmige Elemente. Auf diese Art wird ein guter Wärmetauscher erreicht. Das Medium für den Wärmetransport, bei dem es sich nicht unbedingt nur um Wasser handeln muss, steht dabei nicht unter Druck und muss nicht erneuert werden, sodass es mit dem nötigen Korrosionsschutz versehen werden kann.

Vorstehend wurde eine dreistufige Vorrichtung mit einem Latentwärmespeicher beschrieben. Es versteht sich, dass für weniger anspruchsvolle Einsatzzwecke oder in Gegenden mit überdurchschnittlicher Sonneneinstrahlung eventuell auch auf den Latentwärmespeicher verzichtet werden kann. In diesem Falle würde sich die Anlage durch Wegfall einiger Ventile etwas vereinfachen.

Die erfindungsgemässe Vorrichtung ist selbstverständlich nicht nur im Zusammenhang mit Sonnenenergie verwendbar, sondern ist auch zur Verwertung von Abwärme etc. geeignet für z.B.

Raumheizung, Warmwasserbereitung, Trocknungsanlagen in Gewerbe und Landwirtschaft etc. Ferner ist die Vorrichtung auch in Kombination mit Klimaanlagen, Kühlaggregaten etc. einsetzbar.

**Patentansprüche:**

1. Vorrichtung zur Warmwasserbereitung mittels Sonnenenergie, mit einem Sonnenkollektor (K) und einem ersten und einem zweiten Wärmetauscher (B, C), die brauchwasserseitig in Reihe geschaltet sind, wobei der erste (C) auf einem höheren Temperaturniveau und der zweite (B) auf einem niedrigeren Temperaturniveau arbeitet und wobei die Wärmetauscher und der Sonnenkollektor über Leitungen und Ventile (1–7) in Abhängigkeit von der Temperatur des Zirkulationsmediums im Kollektor zu verschiedenen Kreisläufen zusammenschaltbar sind, dadurch gekennzeichnet, dass ein dritter Wärmetauscher (A) vorgesehen ist, der auf einem niedrigeren Temperaturniveau arbeitet als der zweite Wärmetauscher (B) und brauchwasserseitig mit den beiden anderen Wärmetauschern (B, C) in Reihe geschaltet ist.

2. Vorrichtung nach Anspruch 1, dadurch gekennzeichnet, dass dem zweiten Wärmetauscher (B) ein Latentwärmespeicher (S) zugeordnet ist, der in Abhängigkeit von der Temperatur des Zirkulationsmediums im Kollektor zu verschiedenen Kreisläufen mit dem Kollektor (K) und/oder dem ersten Wärmetauscher (C) zusammenschaltbar ist.

3. Vorrichtung nach Anspruch 1 und 2, dadurch gekennzeichnet,
dass die Wärmetauscher (A,B,C), der Speicher (S) und der Kollektor (K) über die Leitungen und Ventile (1–7) zu einem Entlade- und drei Ladekreisläufen zusammenschaltbar sind, von denen der Entladekreislauf den Speicher (S) und den zweiten Wärmetauscher (B), der erste Ladekreislauf den Kollektor (K) und den dritten Wärmetauscher (A), der zweite Ladekreislauf den Kollektor (K), den Speicher (S) und den zweiten Wärmetauscher (B), und der dritte Ladekreislauf den Kollektor (K), den ersten Wärmetauscher (C), den Speicher (S) und den zweiten Wärmetauscher (B) sowie jeder Kreislauf ein Umwälzmittel (P) enthält,
und dass Fühler für die Temperatur $(T_K)$ des Zirkulationsmediums im Kollektor, die Betriebstemperaturen $(T_A, T_B, T_C)$ der drei Wärmetauscher und die Temperatur $(T_S)$ des Speichers sowie eine mit diesen Fühlern zusammenarbeitende Steuerung (ST) vorgesehen sind, welche

a) den ersten Ladekreislauf aktiviert, wenn die Temperatur $(T_K)$ des Zirkulationsmediums im Kollektor (K) höher als die Betriebstemperatur $(T_A)$ des dritten Wärmetauschers (A) und niedriger als die des zweiten Wärmetauschers (B) ist,

b) den zweiten Ladekreislauf aktiviert, wenn die Temperatur $(T_K)$ des Zirkulationsmediums im Kollektor (K) höher als die Betriebstemperatur $(T_B)$ des zweiten Wärmetauschers (B) ist,

c) den dritten Ladekreislauf aktiviert, wenn die Temperatur $(T_K)$ des Zirkulationsmediums im Kollektor (K) höher als die Betriebstemperatur $(T_C)$ des ersten Wärmetauschers (C) ist, und

d) den Entladekreislauf aktiviert, wenn die Temperatur $(T_K)$ des Zirkulationsmediums im Kollektor (K) tiefer als die Betriebstemperatur $(T_A)$ des dritten Wärmetauschers (A) und gleichzeitig die Temperatur $(T_B)$ des Speichers (S) höher als die Betriebstemperatur $(T_B)$ des zweiten Wärmetauschers (B) ist.

4. Vorrichtung nach Anspruch 3, dadurch gekennzeichnet, dass der erste Wärmetauscher (C) mit Heizmitteln (34) ausgestattet und mit dem Speicher (S) und dem zweiten Wärmetauscher (B) sowie dem Umwälzmittel (P) zu einem über die Steuerung (ST) aktivierbaren vierten Ladekreislauf zusammenschaltbar ist.

5. Vorrichtung nach Anspruch 3, dadurch gekennzeichnet, dass ein Abfluss für erwärmtes Brauchwasser vorgesehen ist, der über die mit einem weiteren Temperaturfühler für die Temperatur $T_{W2}$ des Brauchwassers am Ausgang des zweiten Wärmetauschers (B) zusammenarbeitende Steuerung mit dem Brauchwasserausgang des zweiten (B) oder des ersten Wärmetauschers (C) verbindbar ist, je nach dem, ob die Temperatur des Brauchwassers am Ausgang des zweiten Wärmetauschers (B) über oder unter einer vorgegebenen Solltemperatur $(T_{Soll})$ liegt.

6. Vorrichtung nach Anspruch 1, dadurch gekennzeichnet, dass der dritte Wärmetauscher (A) eine von den übrigen Teilen räumlich im wesentlichen getrennte Einheit bildet und höchstens unwesentlich wärmeisoliert ist.

7. Vorrichtung nach Anspruch 2, dadurch gekennzeichnet, dass der zweite Wärmetauscher (B) teilweise direkt vom Speicher (S) umschlossen ist,

8. Vorrichtung nach Anspruch 2, dadurch gekennzeichnet, dass das wärmespeichernde Medium des Speichers (S) ein teilkristalliner vernetzter Kunststoff ist.

9. Vorrichtung nach Anspruch 1, dadurch gekennzeichnet, dass die Wärmetauscher (A,B,C) je ein Behältnis (11,21,31) mit einem wärmeübertragenden Medium umfassen, in welches eine primäre und eine sekundäre Austauschschlange (12,22,32,13,23,33) eintauchen.

10. Vorrichtung nach Anspruch 9, dadurch gekennzeichnet, dass der erste Wärmetauscher (C) zusätzlich ein Latentwärmespeichermaterial als wärmeübertragendes Medium enthält.

11. Vorrichtung nach Anspruch 3, dadurch gekennzeichnet, dass die Steuerung (ST) vom dritten Ladekreislauf auf den zweiten Ladekreislauf und von diesem auf den ersten Ladekreislauf schaltet, wenn die Betriebstemperatur $(T_C$ bzw. $T_B)$ des ersten bzw. zweiten Wärmetauschers über je einen Grenzwert $(T_{grenz})$ ansteigt.

12. Vorrichtung nach Anspruch 11, dadurch gekennzeichnet, dass die Steuerung (ST) kaltes Brauchwaser durch den dritten Wärmetauscher (A) fliessen lässt, falls auch dessen Betriebstemperatur $(T_A)$ über einen vorgegebenen Wert ansteigt.

13. Vorrichtung nach Anspruch 9, dadurch gekennzeichnet, dass die Wärmetauscher plattenförmig ausgebildet sind.

14. Vorrichtung nach Anspruch 8, dadurch gekennzeichnet, dass der Speicher (S) aus plattenförmigen Elementen besteht.

15. Vorrichtung nach einem der Ansprüche 1 bis 4 und 6 bis 14, dadurch gekennzeichnet, dass der erste Wärmetauscher (C) brauchwasserseitig über ein Mischventil (MV2) bygepasst ist.

16. Vorrichtung nach einem der Ansprüche 1 bis 4 und 6 bis 15, dadurch gekennzeichnet, dass der zweite Wärmetauscher (B) brauchwasserseitig über ein Mischventil (MV1) bygepasst ist.

**Claims:**

1. Apparatus for heating water by means of solar energy, comprising a solar collector (K) and a first and a second heat exchanger (B, C), which are connected in series on the service water side, the first (C) operating at a higher temperature level and the second (B) at a lower temperature level, and the heat exchangers and the solar collector being adapted to be interconnected to form different circuits via pipes and valves (1–7) in dependence on the temperature of the circulating medium in the collector, characterised in that a third heat exchanger (A) is provided, which operates at a lower temperature level than the second heat exchanger (B) and is connected in series with the other two heat exchangers (B, C), on the service water side.

2. Apparatus according to Claim 1, characterised in that the second heat exchanger (B) has associated with it a latent heat accumulator (S) which is adapted to be interconnected to the collector (K) and/or the first heat exchanger (C) to form different circuits in dependence on the temperature of the circulating medium in the collector.

3. Apparatus according to Claims 1 and 2, characterised in that the heat exchangers (A,B,C), the accumulator (S) and the collector (K) are adapted to be interconnected via the pipes and valves (1–7) to form a discharge circuit and three charging circuits, of which the discharge circuit comprises the accumulator (S) and the second heat exchanger (B), the first charging circuit comprises the collector (K) and the third heat exchanger (A), the second charging comprises the collector (K), the accumulator (S) and the second heat exchanger (B), and the third charging circuit comprises the collector (K), the first heat exchanger (C), the accumulator (S) and the second heat exchanger (B) and each circuit comprises a circulating means (P), and sensors are provided for the temperature ($T_K$) of the circulating medium in the collector, the operating temperatures ($T_A$, $T_B$, $T_C$) of the three heat exchangers and the temperatures ($T_S$) of the accumulator, and a control system ($S_T$) co-operating with said sensors, which control system:

a) activates the first charging circuit when the temperature ($T_K$) of the circulating medium in the collector (K) is higher than the operating temperature ($T_A$) of the third heat exchanger (A) and lower than that of the second heat exchanger (B),

b) activates the second charging circuit when the temperature ($T_K$) of the circulating medium in the collector (K) is higher than the operating temperature ($T_B$) of the second heat exchanger (B),

c) activates the third charging circuit when the temperature ($T_K$) of the circulating medium in the collector (K) is higher than the operating temperature ($T_C$) of the first heat exchanger (C) and

d) activates the discharge circuit when the temperature ($T_K$) of the circulating medium in the collector (K) is lower than the operating temperature ($T_A$) of the third heat exchanger (A) and at the same time the temperature ($T_S$) of the accumulator (S) is higher than the operating temperature ($T_B$) of the second heat exchanger (B).

4. Apparatus according to Claim 3, characterised in that the first heat exchanger (C) is equipped with heating means (34) and is adapted to be interconnected with the accumulator (S) and the second heat exchanger (B) and the circulating means (P) to form a fourth charging circuit adapted to be activated via the control system ($S_T$).

5. Apparatus according to Claim 3, characterised in that a heated service water outflow is provided and depending upon whether the temperature of the service water at the outlet of the second heat exchanger (B) is above or below a predetermined required temperature ($T_{Soll}$) is connected to the service water outlet of the second heat exchanger (B) or of the first heat exchanger (C) via the control system co-operating with another temperature sensor for the temperature ($T_{W2}$) of the service water at the outlet of the second heat exchanger (B).

6. Apparatus according to Claim 1, characterised in that the third heat exchanger (A) forms a unit which is substantially separate spatially from the other parts and is at most insignificantly thermally insulated.

7. Apparatus according to Claim 2, characterised in that the second heat exchanger (B) is partially directly enclosed by the accumulator (S).

8. Apparatus according to Claim 2, characterised in that the heat-storage medium of the accumulator (S) is a partially cristalline crosslinked plastic.

9. Apparatus according to Claim 1, characterised in that the heat exchangers (A,B,C) each comprise a container (11,12,31) containing a heat-transmitting medium in which a primary and a secondary exchange coil (12,22,32,13,23,33) are immersed.

10. Apparatus according to Claim 9, characterised in that the first heat exchanger (C) additionally contains a latent heat storage material as heat transmitting medium.

11. Apparatus according to Claim 3, characterised in that the control system (ST) switches from the third charging circuit to the second charging circuit and from the latter to the first charging circuit when the operating temperature ($T_C$ or $T_B$) of the first or second heat exchanger rises above a critical value in each case ($T_{grenz}$).

12. Apparatus according to Claim 11, characterised in that the control system (ST) causes cold service water to flow through the third heat exchanger (A) if its operating temperature ($T_A$) also rises above a predetermined value.

13. Apparatus according to Claim 9, characterised in that the heat exchangers are of the plate type of construction.

14. Apparatus according to Claim 8, characterised in that the accumulator (S) consists of elements in the form of plates.

15. Apparatus according to one of Claims 1 to 4 and 6 to 14, characterised in that the first heat exchanger (C) is bypased by a mixer valve (MV2) on the service water side.

16. Apparatus according to one of Claims 1 to 4 and 6 to 15, characterised in that the second heat exchanger (B) is bypassed by a mixer valve (MV1) on the service water side.

**Revendications**

1. Dispositif pour la préparation d'eau chaude au moyen de l'énergie solaire, avec un collecteur solaire (K) et un premier et un deuxième échangeur de chaleur (B,C), qui sont montés en série du coté de l'eau de consommation, le premier (C) travaillant à un niveau de température élevé et le deuxième (B) travaillant à un niveau de température bas et les échangeurs de chaleur et le collecteur solaire pouvant être reliés ensemble à des circuits divers par l'intermédiaire de conduites et de soupapes (1 à 7) en fonction de la température du milieu de circulation dans le collecteur, ce dispositif étant caractérisé par le fait qu'un troisième échangeur de chaleur (A) est prévu, qui travaille à un niveau de température plus bas que le deuxième échangeur de chaleur (B) et qui est monté en série du côté de l'eau de consommation avec les deux autres échangeurs de chaleur (B,C).

2. Dispositif selon la revendication 1, caractérisé par le fait qu'au deuxième échangeur de chaleur (B) est adjoint un accumulateur de chaleur latente (S) qui, en fonction de la temperature du milieu de circulation dans le collecteur, peut être raccordé à divers circuits avec le collecteur (K) et/ou le premier échangeur de chaleur (C).

3. Dispositif selon les revendications 1 et 2, caractérisé par le fait que les échangeurs de chaleur (A,B,C), l'accumulateur (S) et le collecteur (K) par l'intermédiaire de conduites et de soupapes (1–7) sont reliables à un circuit de déchargement et à trois circuits de chargement, parmi lesquels le circuit de déchargement contient l'accumulateur (S) et le deuxième échangeur de chaleur (B), le premier circuit de chargement contient le collecteur (K) et le troisième échangeur de chaleur (A), le deuxième circuit de chargement contient le collecteur (K), l'accumulateur (S) et le deuxième échangeur de chaleur (B), et le troisième circuit de chargement contient le collecteur (K), le premier échangeur de chaleur (C), l'accumulateur (S) et le deuxième échangeur de chaleur (B) et chaque circuit contient un moyen de circulation (P), et que sont prévues des sondes pour la température ($T_K$) du milieu de circulation dans le collecteur, et températures de fonctionnement ($T_A, T_B, T_C$) des trois échangeurs de chaleur et la température ($T_S$) de l'accumulateur, ainsi qu'un dispositif de commande (ST) travaillant en collaboration avec ces sondes, et qui

a) actionne le premier circuit de chargement quand la température ($T_K$) du milieu de circulation dans le collecteur (K) est supérieure à la température de fonctionnement ($T_A$) du troisième échangeur de chaleur (A) et inférieure à celle du deuxième échangeur de chaleur (B),

b) actionne le deuxième circuit de chargement quand la température ($T_K$) du milieu de circulation dans le collecteur (K) est supérieure à la température de fonctionnement ($T_B$) du deuxième echangeur de chaleur (B),

c) actionne le troisième circuit de chargement quand la température ($T_K$) du milieu de circulation dans le collecteur (K) est supérieure à la température de fonctionnement ($T_C$) du premier échangeur de chaleur (C), et

d) actionne le circuit de déchargement quand la température ($T_K$) du milieu de circulation dans le collecteur (K) est inférieure à la température de fonctionnement ($T_A$) du troisième échangeur de chaleur (A) et qu'en même temps la température ($T_S$) de l'accumulateur (S) est supérieure à la température de fonctionnement ($T_B$) du deuxième echangeur de chaleur (B).

4. Dispositif selon la revendication 3, caractérisé par le fait que le premier échangeur de chaleur (C) est conçu avec un moyen de chauffage (34) et avec l'accumulateur (S) et le deuxième échangeur de chaleur (B), ainsi qu'avec le moyen de circulation (P) peut être relié à un quatrième circuit de chargement pouvant être actionné au moyen du dispositif de commande (ST).

5. Dispositif selon la revendication 3, caractérisé par le fait qu'est prévue une sortie pour l'eau de consommation chaude, qui, par l'intermédiaire du dispositif de commande coopérant avec une autre sonde de température pour la température ($T_{W2}$), de l'eau de consommation à la sortie du deuxième échangeur de chaleur (B) peut être reliée avec la sortie pour l'eau de consommation du deuxième échangeur de chaleur (B) ou du premier échangeur de chaleur (C), selon que la température de l'eau de consommation à la sortie du deuxième échangeur de chaleur (B) est supérieure ou inférieure à une température de consigne imposée ($T_{consi}$).

6. Dispositif selon la revendication 1, caractérisé par le fait que le troisième échangeur de chaleur (A) forme, parmi les autres parties, une unité séparée spatialement pour l'essentiel et est isolé thermiquement tout au plus d'une façon non essentielle.

7. Dispositif selon la revendication 2, caractérisé par le fait que le deuxième échangeur de chaleur (B) est entouré partiellement directement par l'accumulateur (S).

8. Dispositif selon la revendication 2, caractérisé par le fait que le milieu accumulant la chaleur de l'accumulateur (S) est une matière synthétique réticulée partiellement cristallisée.

9. Dispositif selon la revendication 1, caractérisé par le fait que les échangeurs de chaleur (A,B,C) contiennent chacun un récipient (11,21,31) avec un milieu transmettant la chaleur, dans lequel plonge un serpentin échangeur primaire et un serpentin échangeur secondaire (12,22,32,13,23,33).

10. Dispositif selon la revendication 9, caractérisé par le fait que le premier échangeur de chaleur (C) contient en plus une matière accumulatrice de la chaleur latente comme milieu transmettant la chaleur.

11. Dispositif selon la revendication 3, caractérisé par le fait que le dispositif de commande (ST) depuis le troisième circuit de chargement branche sur le deuxième circuit de chargement et par celui-ci sur le premier circuit de chargement quand la température de fonctionnement ($T_C$ ou $T_B$) du premier ou du deuxième échangeur de chaleur dépasse chacun une valeur limite ($T_{limite}$).

12. Dispositif selon la revendication 1, caractérisé par le fait que le dispositif de commande (ST) fait couler l'eau de consommation froide à travers le troisième échangeur de chaleur (A), dans le cas où également la température de fonctionnement ($T_A$) de celuis-ci dépasse une valeur imposée.

13. Dispositif selon la revendication 9, caractérisé par le fait que les échangeurs de chaleur sont conçus sous forme de plaques.

14. Dispositif selon la revendication 8, caractérisé par le fait que l'accumulateur (S) est constitué par des éléments en forme de plaques.

15. Dispositif selon l'une quelconque des revendications 1 à 4 et 6 à 14, carctérisé par le fait que le premier échangeur de chaleur (C) est dérivé du côté de l'eau de consommation au moyen d'un mitigeur (MV2).

16. Dispositif selon l'une quelconque des revendications 1 à 4 et 6 à 15, caractérisé par le fait que le deuxième échangeur de chaleur (B) est dérivé du côté de l'eau de consommation au moyen d'un mitigeur (MV1).

Fig. 1

_Fig. 2_

_Fig. 3_